# EUROPEAN PATENT APPLICATION

(11) **EP 2 052 835 A1**
(43) Date of publication of application: **29.04.2009**
(21) Application number: 07020993.7
(22) Date of filing: 26.10.2007
(51) Int. Cl.: B29C 45/37

(54) **Injection moulding method and apparatus**

(71) Applicant: Rieter Technologies AG, 8406 Winterthur (CH)
(72) Inventor: The designation of the inventor has not yet been filed
(74) Representative: Van Adrichem Geisseler, Johanna

(57) **Abstract**

The invention is directed to a method and an apparatus for the production of three-dimensionally thin products using injection moulding of polymer based material.

By dividing one of the mould halves in at least two groups of elements, whereby at least a first group of at least one element forms a rim cavity and a stop, defined as an area of the element contacting the other halve if the mould is in the closed position, and at least a second group of at least one element forms the main body part of the cavity, whereby all the elements together form with the other mould halve one cavity, and whereby each of the groups of elements is connected to its own means for clamping, it is possible to produce a set of different products with a constant rim thickness and a variable thicknes of the main body part of the product.

## Description

The invention is directed to a method and an apparatus for the production of three-dimensionally thin products using injection moulding of polymer based material.

An injection moulding apparatus normally consists of:
- a mould built as two halves forming together the cavity for the injection of the material;
- means for relative moving the two mould halves to and away from each other to open and close the mould;
- a means for clamping the two halves together to prevent the material from leaking out of the mould during injection forming a fix position under pressure;
- and finally a means for injecting the material into the cavity of the mould.

Depending on the literature the means for moving and clamping are together called clamping system.

According to the Injection Moulding Handbook of Oswald et al. (Hanser Publishers, 2001) a clamping system has three major functions:
- traversing the mould to the closed and to the opened position, optionally combined with a guidance of the mould;
- keeping the mould closed during part formation, i.e., to keep the mould closed during the injection of melt into the cavities. This may require considerable clamping force as the melt pressure within the mould is often very high.
- provide means for ejecting the thus formed part, i.e., a means to eject the part after the injected material has cooled.

There are three main types of clamping systems:
- Hydraulic clamps (or pneumatic clamps) distinguished mainly by the fact that the load path passes through the fluid used to pressurize the clamping cylinder(s); the length of the column of fluid being pressurized is equal to or greater than the stroke of the clamp. This fact separates this class of clamps from hydromechanical clamps. Furthermore, with this type of clamps the clamping force is in direct proportion to the pressure applied to the clamping cylinder.
- Hydromechanical clamps distinguished mainly by the fact that the load path passes through the fluid (oil or water) used to pressurize the clamping cylinder(s), the length of the column of fluid being pressurized is independent of and much shorter than the stroke of the clamp. This fact separates this class of clamps from hydraulic clamps. Furthermore the clamping force of the hydromechanical clamps is in direct proportion to the pressure applied to the clamping cylinder and the available clamp stroke is a function of the traversing actuator stroke with provisions for varying mould shut heights typically being through tie rod nut adjustments on the rear platen.
- Mechanical clamps or toggle clamps distinguished mainly by the fact that the load path does not pass through the hydraulic/pneumatic cylinder(s) or electrically driven actuator(s); the clamp force is not in direct proportion to the force of the actuator. Instead it is a complex relationship between the available actuating force during toggle-up and the stiffness of the clamp. Furthermore, with this type of clamps the available clamp stroke is a function of the linkage system with provisions for varying mould shut heights typically being through tie rod nut adjustments on the rear platen. The pin-to-pin center line length of the rear link is the dominant factor in determining clamp stroke.

The mould can be partly open or closed at the beginning of the injection of the material. This depends on the material used, the design of the mould and optionally the use of heating and cooling of the mould. For reaction activated moulding (RIM), for instance, reactive components are injected in the cavity of a closed mould, where they are allowed to react with each other filling the space of the cavity and forming the body of the product. In injection-compression moulding a partly open mould is normally used at the beginning of the injection to obtain a better flow of the material. In a second phase the mould is closed completely, thereby compressing the material to fill the whole cavity. The injection and compression can partly overlap in sequence. Injection compression moulding is preferably used for products with thinner parts. A higher pressure is needed for the injection of material through cavities with a small width. By starting the injection before the mould is closed completely, the cavity is larger and therefore a lower pressure can be used and the cycle time for the filling is shorter.

According to the state of the art the mould for all these types of injection moulding contains at least of two mould halves with a surface structure together forming a cavity for the product to be formed. In most cases one of the mould halves is fixed, not movable and contains the inlet for the injection of the material. This halve is called "core" or "A half" The other plate can be moved to and away from the first plate to open and close the cavity and enable the ejection of the finished product. This halve is normally called "female" or "B half". To easily remove the product, the moulds are often vertically arranged to use gravity as an aid for the ejection of the product. A separate mould is produced for each product.

For products such as acoustic parts for a certain model of a car the design may be identical but the acoustic properties may differ. This can be the case when different engines are used, i.e. diesel or petrol engines. Every type of engine has its own level of noise and requires different insulation. This leads to the need of a series of products that have the same three-dimensional shape and mainly differ in the thickness of the product. In the insulation product the gaps for installing it in a car are given. Around the gaps and around the border of the product a rim is needed, particularly for fixation. The dimension of the gaps together with the rims is normally only influenced by the design, and not by the insulation properties needed. Because the points and means for fixation are the same for a certain model of a car independent of the engine used, it is an advantage when the dimensions of the gaps and rims remain unchanged.

For the products as described above the state of the art only offers the option of producing a mould for every product specification. Thus for a certain model of car with the option of different engines, for every engine an own product mould must be manufactured to achieve the different acoustic properties. This is not only expensive, it is also time-consuming to refit the injection moulding machinery with a new mould stack every time an other set of acoustical properties is needed.

With the current state of the art it is not possible to produce products with a variable thickness and a constant rim. It is therefore the object of the invention to obtain a mould and a injection moulding method for the production of three dimensional shaped products, eventually with openings, which can be used for different product specifications keeping the same overall three dimensional shape, particularly the same dimensions for the rim and the possible gaps in the products.

This problem is solved with the injection moulding tool of claim 1. By dividing one of the mould halves in at least two groups of elements, whereby at least a first group of at least one element forms a rim cavity and a stop, defined as an area of the element contacting the other halve if the mould is in the closed position, and at least a second group of at least one element forms the main body part of the cavity, whereby all the elements together form with the other mould halve one cavity, and whereby each of the groups of elements is connected to its own means for clamping, it is possible to produce a set of different products with a constant rim thickness and a variable thickness of the main body part of the product.

The mould consists of 2 halves: the A halve and the B halve of the mould, when the A and B halve are closed together they form a cavity inside the closed mould. The product of the invention contains a three-dimensional shape which is formed by both halves of the mould, A and B together. The A-halve is the non movable halve and the B halve is the moving part of the mould. Optionally both halves are moving to and away from each other.

With "stop" is meant an area of the mould where both the A- and the B-halve part come in contact with each other and prevent the material from running further. This can either be at the border of the product, preventing the material from spilling out of the mould, or in the middle of the product producing a gap in the product.

With "rim" the border of the product is meant. This can either be the outer edge of the product or the border of a gap in the product. For instance for a flat product: the rim is the border of the object and not the surface of the object. A gap is a hole in the product, for instance for fixation of the product to an other part. With the rim in the mould, the area of the cavity dedicated to form a rim in the product is meant.

In a simplest form of the invention the product coming out of the mould contains a main body part with a certain thickness and a rim around this main body part, whereby the rim can have the same thickness as the main body part or can differ from the thickness of the main body part. According to the state of the art this would be produced a normal mould stack with, when necessary a stepped thickness to provide for a difference in the thickness between the main body part and the rim. The sides of the mould would be closed by stops as parts of both mould halves connect to each other. Such closed mould halves can then only be used for 1 product with the previously defined dimensions, in particularly the thicknesses.

In the invention the closed mould still contains the A-halve as disclosed previously and a B-halve, but the B-halve is split up in groups of elements.
The B-halve consists of at least two groups of elements:
- a first group of at least one element forming in the closed mould a rim cavity and a stop, defined by a contact area with the A-halve.
- a second group of elements consist of at least one element forming in the closed mould, part of the cavity for the main body of the product.
The A-halve and all the elements of the B-halve together form in the finally closed form the cavity for the product as usual.

All elements contained in one group have their own means for moving to and away from the A-halve to close and open the mould. All elements of all groups have the same direction of movement. However the length of movement is only constant for the first group of elements. Because this group of elements contains the "stops", the elements are responsible for closing the mould so that no material can spill out of the mould after closing. The length of movement to the other halves of the second and other groups is not constant. Depending on the final thickness the movement can be longer or shorter, decreasing or increasing the final distance of the group of elements to the other mould halve and so creating the wanted thickness. Therefore it is possible to obtain a product with a constant rim thickness and a variable thickness of the main body part, making the tool more versatile in its use.

The means for moving each of the groups of elements can be a hydraulic system, a hydromechanical system or a mechanical system.

It can be that one group of elements uses the clamping system of a standard injection compression machine of the state of the art and the injection compression tool according to the invention contains additional clamping systems for the other groups and a possibility to connect the group without its own system to the existing system.

It is also possible that the injection machine only contains two fixed platens and the injection compression tool contains the mould halves with at least one mould halve according to the invention and a clamping system for each group of elements.

Alternatively it is possible that the injection machine contains the two fixed platens and additional clamping systems, at least two systems, and the injection compression tool contains again the moulds according to the invention. The group of elements are each attached to a frame which can be allocated to one of the clamping systems of the machine.

Other combinations of the injection tool and the injection machinery can be feasible following the invention. The injection tool and machinery according to the state of the art and the invention is explained in further detail with help of the figures. The features of the separate examples can be used in combination with each other following the scope of the invention.

A computer aided control of the different groups of elements in their movement may be implemented to control the sequence of opening and closing of the clamping systems of each group.

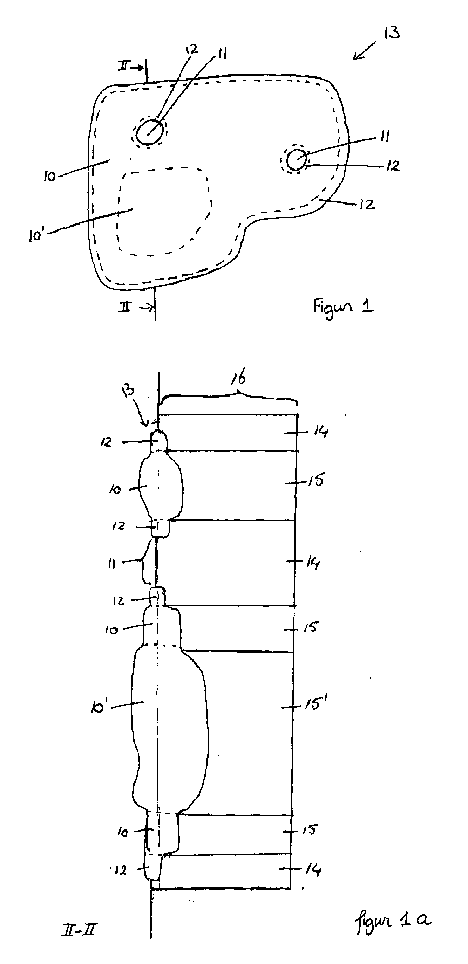

- Figur 1.: An example for an acoustic product
- Figur 1 a.: The cross section II-II of the acoustic product and a mould halve split in its groups of elements
- Figur 2: Schema of an injection compression machine according to the state of the art
- Figur 3: Schema of an injection compression machine according to the state of the art
- Figur 4: Injection compression tool and machine according to the invention
- Figur 5: Injection compression tool and machine according to the invention

Figure 1 and 1a shows an acoustical product with the main features of such a product. The main features of an acoustical product for the automotive are that the products are mainly large flat object, containing main body 10 with a rim 9 around its border. Additionally the product may have gaps 12 for fixation of the product to for instance a car part. Also the gaps contain a rim 11. Additionally the product may contain a padded area in the main body part 10, which has an increased thickness 10'.

Figure 1 a shows the cross section II-II of figure 1. Containing the same basic features: a main body part 10, 10', gaps 12 and rims around the product and the gaps 11. For the product it is not necessary that the product is symmetrical the front and the back of the product can have a different three-dimensional design. At the right side of the product an example of a B-halve split in groups of elements 16 according to the invention is shown. The first group of elements 14 contain the rim cavity and the "stop". A second group of elements contain the contour for the main body part of the cavity 15, 15'. Although the padded body part can be combined with the second group of elements, a third group of elements containing the contour for the padded main body part 15' is feasible.

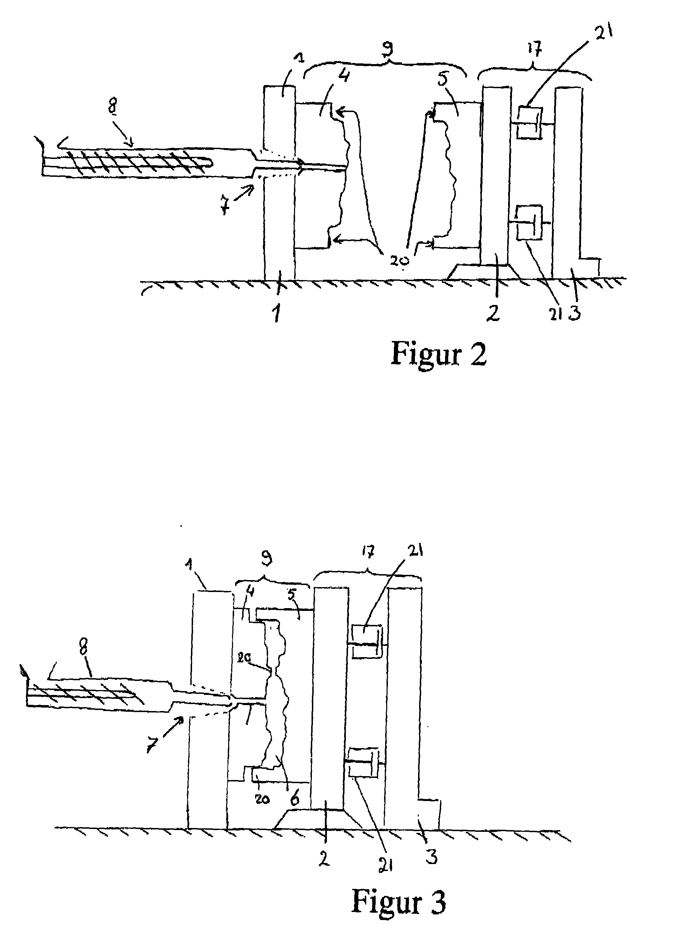

Figure 2 shows schematically an injection compression machine according to the state of the art. The machine components can be divided in two groups: the injection compression tool 9 consisting of the 2 mould halves: the A-halve 4 and the B-halve 5, forming together in the closed position the injection cavity. One of the halves contains the inlet 7 for the injection of the material. The injection compression tool can be removed and replaced by a similar one with an other cavity to obtain different products.

The other group of components forms part of the machine itself and consist of 2 or 3 platens. In figure one a machine with 3 platens 1,2, and 3 is shown. In the case of 3 platens the two outer platens 1 and 3 are in a fixed position and the middle platen can moved between the two outer platens. Preferably the platen is guided (not shown). For the movement of the middle platen 2 and its fixation in the position in which the mould is closed, a clamping system 17 is placed between the second and the third platen. As a clamping system a hydraulic, hydromechanical or mechanical system as described before can be used. In figure 1 pressure hydraulic cylinders 21 are shown. These systems are responsible for the movement of the B-halve 5 to and away from the A-halve 4 and for the fixation of the mould in closed position.
Additionally injection means, for instance in the form of an injection screw 8 is connected to the injection inlet 7 of the mould.

A injection compression cycle on the machine of figure 2 can be as follow:
In a first phase the mould is partly closed so that the cavity is almost in its final closed position. Then the injection of the material is initiated and during the injection of the material the mould is closed further until it arrives in the fully closed position. During this second phase of movement the already injected material is compressed which helps filling the complete cavity.

In figure 3 the same injection compression moulding machine is shown. The difference between figure 2 and 3 is the mould, particularly the way the mould halves close the cavity preventing the injected material from spilling out of the mould during closing. In figure 1 the mould closes by connecting areas of the 2 halves 17. In figure 3 the mould closes by an overlapping end of one halve 12 over the other half. For the "stop" according to the present invention the second form of closing is not advantageous. With the state of the art according to figure 3, it is not feasible to obtain a constant thickness for the rim and a variable thickness of the main body part of the product.

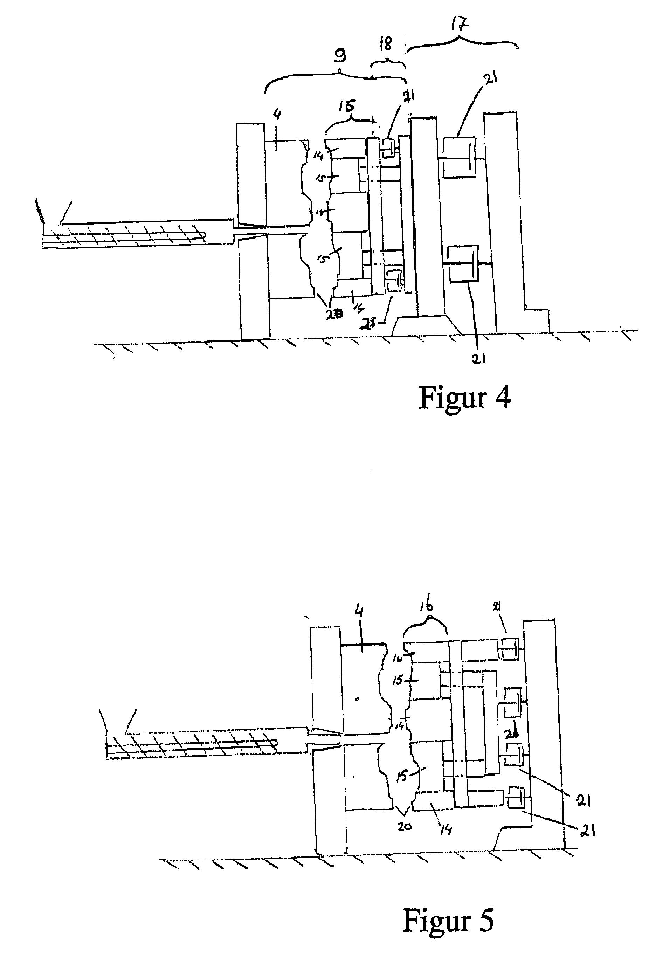

In figure 4 the injection compression tool is replaced with a tool according to the invention. The A-halve is similar to the previous described. The B-halve is divided in groups of elements according to the invention (see also figure 1 a)

The first group of elements contains mould part elements 14 forming in the closed form of the mould a "stop", - a connecting area with the A-halve - additionally containing the cavity for the rim. This group contains of at least one element.

A second group of elements 15 contains the main body part of the cavity. The main body part of the cavity forms in the product the main body (10 in figure 1) and can have a variable thickness dependent on the properties wanted for the product. This group contains at least one element.

In figure 4 the second group of elements is clamped - moved and fixated- by the clamping system 17 of the injection moulding machine. The first group of elements has its own group of clamping elements 18 connecting this group of elements to the second group of elements. In figure 4 a hydraulic system 21 is shown, however other systems producing the same result are feasible as well. This enables the autonomous movement of both groups and additionally the total length of the movement of the second group, ergo the distance of the elements of this group to the other mould halve in closed form can be variable, while the first group always travels the same distance. This enables products with a variable thickness in the main body part and a constant rim thickness.

An injection compression moulding cycle with the injection compression tool according to the invention can then look as follows:
In a first phase the first group of elements is partly closed and the second group of elements starts closing. The injection of the material in the cavity starts. The first group of elements contacts the other half before the injected material reaches the contact areas thereby preventing spilling of the injected material. The second group moves and compresses the material to the wanted thickness of the product body part.

Figure 5 shows an alternative solution for an injection moulding tool according to the invention. In this case a two platen injection moulding machine is equipped with a injection tool according to the invention. The mould again contains the A-halve as one element containing the inlet for the injection of the material into the cavity and a B-halve divided in at least two groups 14, 15 of the invention as discussed earlier. However in this case every group consist of its own means for clamping - movement and fixation in the closed position. Although in this case the means for clamping for each group shown are hydraulic systems 21. Also hydromechanical or mechanical or combinations of systems, also with hydraulic systems, fall into the scope of the invention. The choice of the systems is dependent on the actual product to be produced and the forces needed to clamp the system, particularly to fixate the mould halve and elements in the closed position.

Although not shown it is feasible to increase the number of groups of elements. The first group will stay the same but the second group of elements can be further divided. For instance a third group can be created. The third group can be used to obtain thickness differences in main body part of the product, for instance an area with increased thickness to obtain a padded product. Every group needs however its own autonomous means for movement, comparable to the example of the second group in figure 4 or in figure 5.

Although in the examples of the invention only one halve is divided in groups of elements, it is also possible to mirror the B-halve including its clamping systems and obtain a double system: the "stop's" and rim of the product will be constant but the thickness of the body part of the product can be changed on both sides of the product. Although the injection compression machinery for such a set up will be expensive, particularly doubling the clamping systems. For high class products this can still be a cheaper way of producing, reducing the time to change moulds and reducing the amount of moulds needed. It will be possible to build up an system able to produce a whole range of products with the same overall design but with variable areas of thicknesses.

Although not shown in detail other features normal for the injection compression machine and tools, likes gates, runners cooling system etc. can be included in the machinery and tool according to the invention. These are not pertinent for the invention as claimed and therefore not discussed in detail.

### References

- 1.: platen
- 2.: platen
- 3.: platen
- 4.: first mould halve, A-halve
- 5.: second mould halve, B-halve
- 6.: cavity for the injection of the material forming the product
- 7.: Injection means including the injection inlet into the cavity
- 8.: Injection screw
- 9.: Injection compression tool
- 10.: main body part of the product including a thicker body part 10' forming a pad
- 11.: gap
- 12.: rim
- 13.: Injection moulded product with a three-dimensional shape
- 14.: stop-rim moulding element
- 15.: main body moulding element for the main part 10 of the product,
- 15': main body moulding element for the padded part 10' of the main part of the product
- 16.: mould halve containing groups of elements a first group of elements containing the stop-rim elements 14 and a second group of elements containing the main body part elements 15
- 17.: clamping system
- 20.: connection between the A- and B- halves providing a stop
- 21.: Hydraulic system

## Claims

1. Injection moulding tool with
a mould, for injection moulding of an product with a rim, comprising two mould halves (4, 5) forming together in their closed position a cavity (6) inside the mould for the injection of the material, whereby at least one of the mould halves contains means for injecting the material into the cavity (7);
**characterised in that**
one of the mould halves is divided in at least two groups of elements,
whereby at least a first group of at least one element forms a rim cavity and a stop, defined as an area of the element contacting the other halve if the mould is in the closed position,
and at least a second group of at least one element forms the main body part of the cavity,
whereby all the elements together form with the other mould halve one cavity, and whereby each of the groups of elements is connected to its own means for clamping.

2. Injection moulding tool according to claim 1 whereby the means for clamping is an hydraulic or hydromechanical or mechanical system, or a combination of at least two of these systems.

3. Injection moulding tool according to claim 1 or 2, whereby the means for autonomous movement of all groups have a parallel vector of movement in the open and closed position.

4. Injection moulding tool according to at least one of the preceding claims, whereby the means for the movement of the first group and the second group are connected, so that they can run in sequence.

5. Injection moulding tool according to claim 4, where the connection is a hydraulic system.

6. Injection moulding tool according to one of the preceding claims whereby the second group of elements can be connected to an existing clamping system in a standard injection compression machine.

7. Injection moulding tool according to at least one of the previous claims, whereby an element of the first group is arranged in the element for the main body part of the cavity to form a rimmed gap in the product.
